# EUROPEAN PATENT APPLICATION

(11) **EP 2 039 550 A2**
(43) Date of publication of application: **25.03.2009**
(21) Application number: 08164103.7
(22) Date of filing: 10.09.2008
(51) Int. Cl.: B60J 7/00, B60J 3/02

(54) **Sunshade device**

(30) Priority: 19.09.2007 JP 2007242524
(71) Applicant: Toyota Boshoku Kabushiki Kaisha, Kariya-shi, Aichi 448-8651 (JP)
(72) Inventor: Tominaga, Shinji, Aichi 448-8651 (JP); Takeuchi, Kouichi, Aichi 448-8651 (JP)
(74) Representative: Winter, Brandl, Fürniss, Hübner Röss, Kaiser, Polte Partnerschaft Patent- und Rechtsanwaltskanzlei

(57) **Abstract**

A sunshade device (10) is configured to block light coming through a front window (50) of a vehicle. The front window of the vehicle extends to an area above at least one of a driver seat and a front passenger seat of the vehicle. The front window (50) configures a portion of a front side of a ceiling (52) of the vehicle. A light-blocking member (12) is disposed below the front window. The light-blocking member includes a front side member (14) and a rear side member (16). The front side member is movable in a front-and-rear direction separately from the rear side member.

## Description

### TECHNICAL FIELD

The present invention relates to a sunshade device for blocking light coming through a front window of a vehicle.

### BACKGROUND

A known sunshade device for blocking light coming through a front window of a vehicle is disclosed in a Japanese unexamined patent application publication No. 2006-335300.

The sunshade device described in the publication includes a plate-like sunshade member that can be pulled out frontward from a front end of a roof panel. Attached on the lower surface of the sunshade member is a sun visor. The sun visor is pivotable to a light-blocking position and to a stored position. Therefore, while the sunshade member can block light coming from above, the sun visor can block light from front. Note that such a sunshade device is used with a vehicle that has a front window extending to an area above a front seat. The front seat here includes a driver seat and/or a front passenger seat. In the vehicle of this type, the front window configures at least a portion of a front side of a ceiling.

The known sunshade device has a problem as follows:

When the sun visor is used, the plate-like sunshade member have to be pulled out frontward. Therefore, when the sun visor is used for the front seat, the area above the front seat cannot be open.

When the sun visor is used, since the area above the front seat (that is, the portion of the front side of the ceiling) is not open, outside light such as sunlight or street light cannot be let in the vehicle compartment.

Furthermore, when the sun visor is used, a person sitting in the front seat cannot look at upper outside scenery.

### SUMMARY

The present invention was completed based on the above situation, and its purpose is to provide a sunshade device that can let in outside light through an area above a front seat while blocking light coming from front. The sunshade device can be used with a vehicle that has a front window extending to an area above the front seat.

A first aspect of the present invention is a sunshade device for blocking light coming through a window of a vehicle, including a front window extending to an area above at least one of a driver seat and a front passenger seat, the front window including a portion of a front side of a ceiling, a light-blocking member disposed below the front window, the light-blocking member including a front side member and a rear side member. The front side member can move in a front-and-rear direction separately from the rear side member.

In accordance with the first aspect of the present invention, the front side member is movable in the front-and-rear direction separately from the rear side member. Therefore, the front side member alone can be moved in the front direction of the vehicle. By moving the front side member alone in the front direction of the vehicle, while light from front is blocked, outside light can be let in through the area above the front seat (a front portion of the ceiling). Note that the front seat includes the driver seat and/or the front passenger seat.

A second aspect of the present invention is the sunshade device according to the first aspect of the invention, further including a sun visor disposed in a lower surface side of the front side member. The sun visor can pivot to a light-blocking position and to a stored position.

In accordance with the second aspect of the present invention, light from front can be blocked using the sun visor. At the same time, outside light can be let in through the area above the front seat (the front portion of the ceiling).

A third aspect of the present invention is the sunshade device according to the first or second aspect of the present invention, wherein the rear side member includes a sheet-like member. The sunshade device further includes a roll-up unit. The roll-up unit can roll up the sheet-like member.

In accordance with the third aspect of the present invention, the rear side member includes the sheet-like member that can be rolled up with the roll-up unit. Therefore, when the rear side member is not used, the rear side member can be rolled up with the roll-up unit and thereby compactly stored.

A fourth aspect of the present invention is the sunshade device according to any one of the first to third aspects of the invention, further including a hook. The hook can connect the front side member with the rear side member in the front-and-rear direction.

In accordance with the fourth aspect of the present invention, the hook can connect the front side member with the rear side member. Therefore, the front side member and the rear side member can be handled at the same time.

In accordance with the present invention, while the sunshade device is blocking the light from front, the sunshade device can let in the outside light coming through the area above the front seat (the front portion of the ceiling). The sunshade device can be used with the vehicle that has the front window that extends to the area above the front seat and configures a portion of the front side of the roof.

### BRIEF DESCRIPTION OF THE DRAWINGS

Fig. 1 is an exploded perspective view of a sunshade device;
Fig. 2 is a plan view of the sunshade device seen from an inside of a vehicle compartment;
Fig. 3 is a plan view of the sunshade device seen from the inside of the vehicle compartment, showing a state where a front side member has been pulled out frontward; and
Fig. 4 is a plan view of the sunshade device seen from the inside of the vehicle compartment, showing a state where the front side member and a rear side member have been pulled out frontward.

### DETAILED DESCRIPTION

An embodiment of the present invention will be described with reference to drawings.

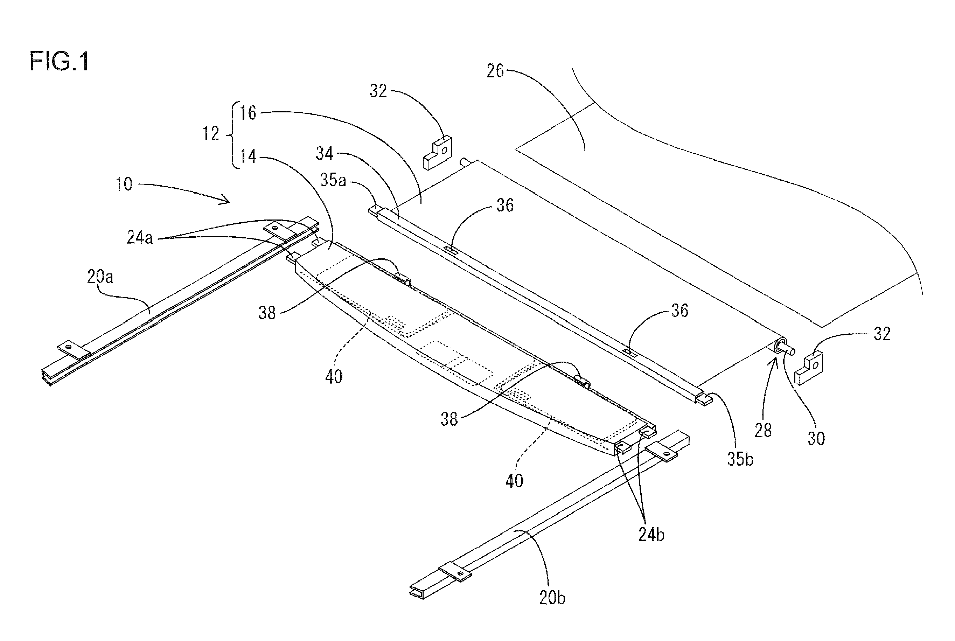

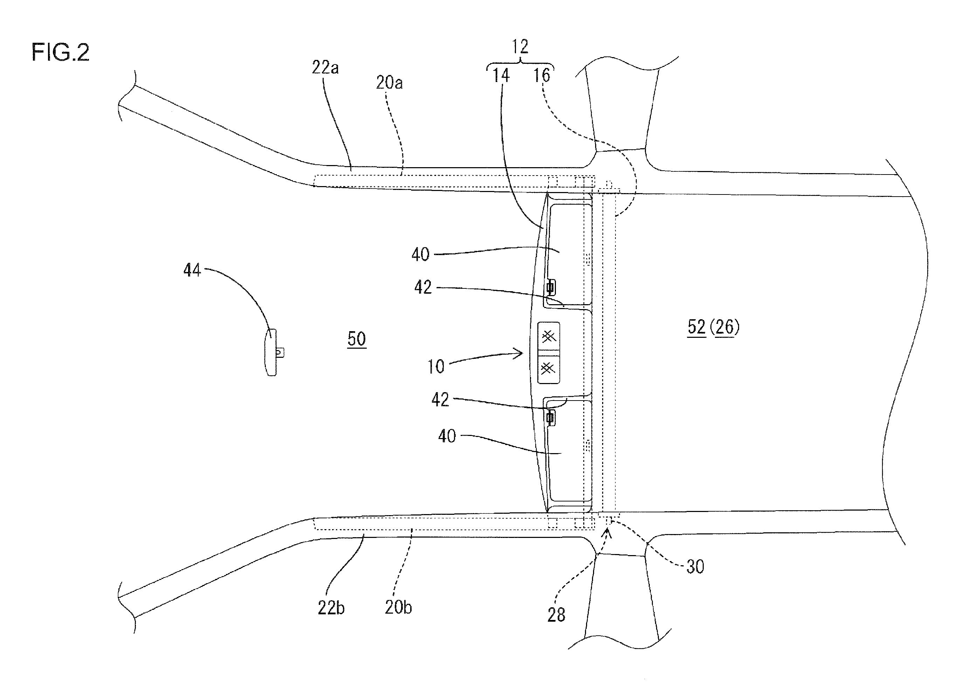

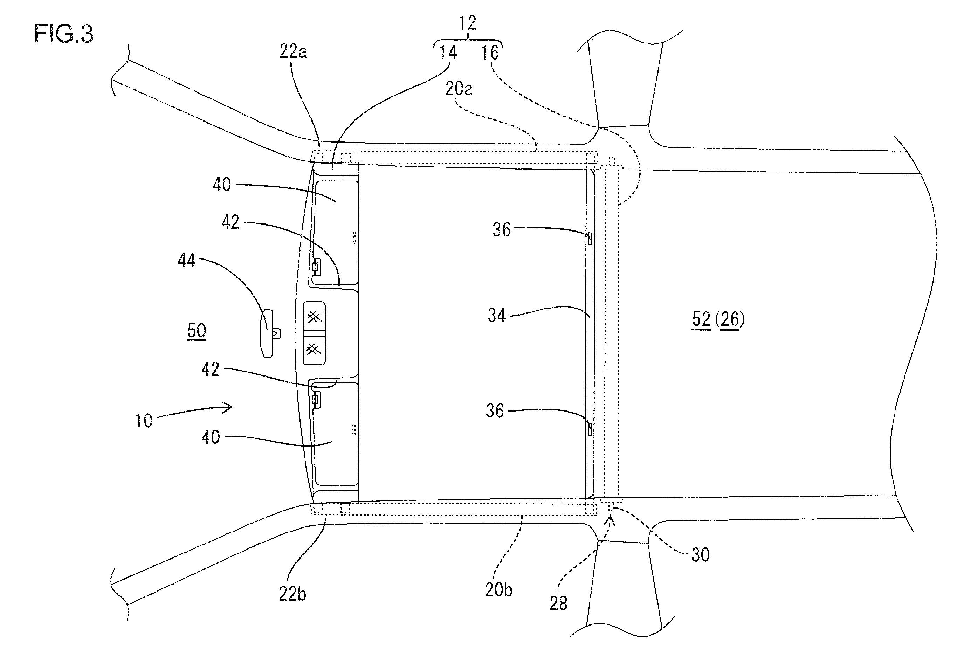

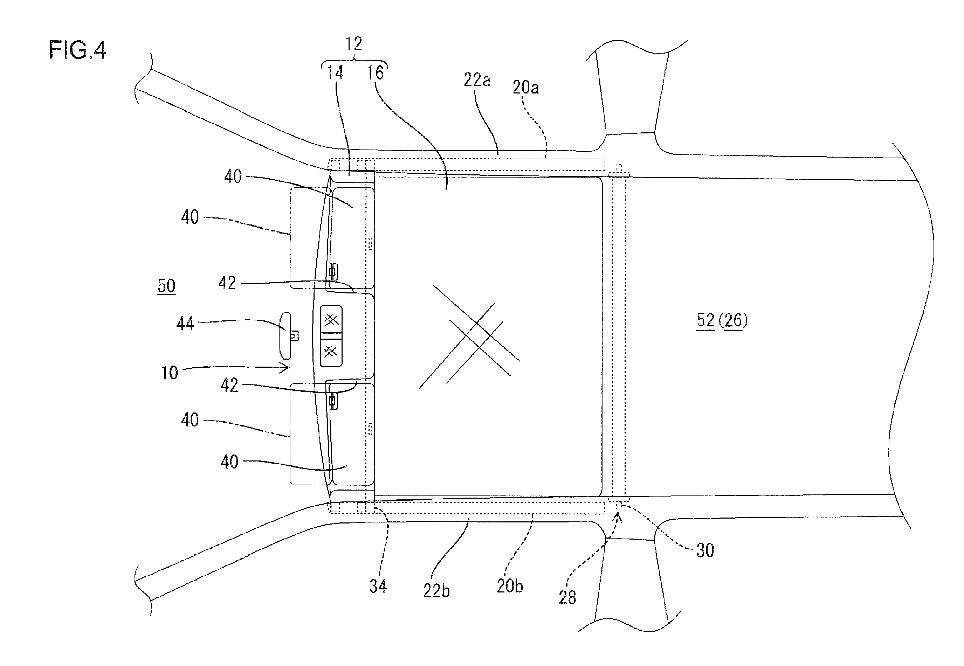

Fig. 1 is an exploded perspective view of a sunshade device 10. Fig. 2 is a plan view of the sunshade device 10 seen from an inside of a vehicle compartment. Fig. 3 is a plan view of the sunshade device 10 seen from the inside of the vehicle compartment, showing a state where a front side member 14 has been pulled out frontward. Fig. 4 is a plan view of the sunshade device 10 seen from the inside of the vehicle compartment, showing a state where the front side member 14 and a rear side member 16 have been pulled out frontward. The left direction in each of Figs. 2 through 4 is hereinafter taken as the front direction of the vehicle, while the right direction in each of the same figures is taken as a rear direction of the vehicle.

The sunshade device 10 of this embodiment is, as shown in Fig. 2, mounted in a vehicle that has a front window 50 extending to an area above a front seat. The front window 50 configures a portion of a front side of a roof 52. Note that, in this embodiment, the "front seat" includes at least one of a driver seat and a front passenger seat. In other words, the sunshade device 10 of this embodiment is mounted in the vehicle that has the front window 50 extending to the area above the front seat, and the front window 50 is integral with the roof 52. In addition, the sunshade device 10 of this embodiment is mounted for blocking light coming through the front window 50 to the inside of the vehicle compartment.

As shown in Figs. 1 through 4, the sunshade device 10 includes a light-blocking member 12. The light-blocking member 12 is disposed below the front window 50 of the vehicle. The light-blocking member 12 includes the front side member 14 and the rear side member 16. The rear side member 14 is disposed in a rear side of the front side member 16.

The front side member 14 includes a plate-like member. The plate-like member may be made of, for example, synthetic resin (polyvinyl chloride resin, polypropylene resin, or the like) or metal (steel, aluminum, or the like).

The length of the front side member 14 in a width direction of the vehicle is almost same with a width of the roof 52 of the vehicle. In addition, the front side member 14 is formed so as to be longer in the width direction of the vehicle than in the front-and-rear direction of the vehicle.

Two guide rails 20a, 20b each are substantially U-shaped in cross section. The front side member 14 is held at both right and left ends thereof by inner surfaces of the two guide rails 20a, 20b. The front side member 14 is thus movable in the vehicle compartment in the front-and-rear direction.

The two guide rails 20a, 20b each are attached to respective roof side rails 22a, 22b of the vehicle. The roof side rails 22a, 22b are fixed along two side edges of the front window 50.

The right and left ends of the front side member 14 is provided with projections 24a, 24b, respectively (see Fig. 1). The projections 24a, 24b are held by the inner surfaces of the respective two guide rails 20a, 20b. The front side member 14 is thus movable in the front-and-rear direction along the inner surfaces of the guide rails 20a, 20b.

The rear side member 16 includes a flexible sheet-like member. The sheet-like member may be, for example, a transparent sheet, a translucent sheet, an opaque sheet, a mesh sheet, a woven fabric, an unwoven fabric, or the like. The sheet-like member may be made of, for example, synthetic resin such as polyvinyl chloride resin or polypropylene resin.

The roof 52 of the vehicle includes a roof panel, and attached below the roof panel is a roof trim 26. The roof trim 26 is an interior material for a ceiling of the vehicle. Provided between the roof panel and the roof trim 26 is a roll-up unit 28. The roll-up unit 28 is arranged to roll up the rear side member 16 in the rear direction of the vehicle.

The roll-up unit 28 includes a roll-up shaft 30 and a spring (not illustrated) for rotating the roll-up shaft 30. The roll-up shaft 30 is attached with two brackets 32 to the lower surface of the roof panel of the vehicle. The roll-up unit 28 is arranged such that the roll-up shaft 30 is rotated by the spring and thereby automatically rolls up the rear side member 16 around the roll-up shaft 30.

A beam-like frame 34 is attached to the rear side member 16. The frame 34 may be made of, for example, synthetic resin such as polyvinyl chloride resin or polypropylene resin or metal such as steel or aluminum. Two ends of the frame 34 is provided with projections 35a, 35b. The projections 35a, 35b are held by the inner surfaces of the respective two guide rails 20a, 20b. The frame 34 is thus movable in the front-and-rear direction along the inner surfaces of the two guide rails 20a, 20b.

The frame 34 is provided with two hook holes 36. The hook holes 36 are arranged to be engaged with hooks 38 that are provided at a rear end portion of the front side member 14. The front side member 14 and the rear side member 16 are arranged to be connected with each other in the front-and-rear direction by engaging the hook holes 36 with the hooks 38.

Plate-like sun visors 40 are attached to a lower surface of the front side member 14. Each of the sun visors 40 is pivotable to a light-blocking position and to a stored position. The sun visors 40 each are attached to respective positions above the driver seat and above the front passenger seat.

A person sitting in the driver seat or in the front passenger seat can use the sun visors 40 by pulling out the front side member 14 in the front direction of the vehicle.

By pivoting the sun visors 40 to the light-blocking positions (positions shown by two-dot chain lines in Fig. 4), light from front can be blocked.

By pivoting the sun visors 40 to the stored positions (positions shown by solid lines in Fig. 4), the sun visors 40 can be stored in respective concavities 42 provided in the lower surface of the front side member 14.

A room mirror 44 is attached to a lower surface of the front window 50. The roommirror 44 is arranged such that the person sitting in the driver seat may look see backward.

Operations and effects of the sunshade device 10 as configured above will be hereinafter explained.

In the sunshade device 10 of this embodiment, the rear side member 16 includes a flexible sheet-like member. Therefore, the rear side member 16 can be rolled up by the roll-up unit 28. Therefore, when the rear side member 16 is not used, the rear side member 16 can be compactly stored between the roof panel and the roof trim 26.

As shown in Fig. 2, when the sunshade device 10 is not used, the front side member 14 and the rear side member 16 can be moved in the rear direction of the vehicle. Therefore, the front window 50 in the area above the front seat can serve as a sun roof for letting in outside light or allowing the person sitting in the front seat to look at upper outside scenery.

As shown in Fig. 3, the front side member 14 can be moved separately from the rear side member 16 in the front direction of the vehicle. That is, it is unnecessary for the front side member 14 to accompany the rear side member 16 when being moved in the front direction of the vehicle; the front side member 14 alone can be moved in the front direction of the vehicle. The light from front thus can be blocked by the sun visors 40 and, at the same time, the outside light can be let in through the front window 50 in the area above the front seat.

As shown in Fig. 4, when the sunshade device 10 is used, the front side member 14 and the rear side member 16 can be moved in the front direction of the vehicle. Therefore, light coming through the front window in the area above the front seat can be blocked. Furthermore, at the same time, light from front can be blocked by the sun visors 40 attached to the lower surface of the front side member 14.

Furthermore, the front side member 14 and the rear side member 16 can be connected with each other in the front-and-rear direction by engaging the hooks 38 with the hook holes 36. The rear side member 16 thus can be held in the state pulled out frontward. In addition, since the front side member 14 and the rear side member 16 can be handled at the same time in the connected state, the front side member 14 and the rear side member 16 are easy to use.

The sunshade device 10 of this embodiment is configured as described above. The sunshade device 10 can be used with the vehicle that has the front window 50 extending to the area above the driver seat and/or the front passenger seat. The front window50 is configuring the portion of the front side of the roof 52. In accordance with the sunshade device 10 of this embodiment, while the light from front is blocked by the sun visors 40, the outside light can be let in through the front window 50 in the area above the driver seat and/or the front passenger seat.

### <Other Embodiments>

The present invention is not limited to the embodiments described above with reference to the drawings, the following embodiments are also included within the scope of the present invention.

(1) In the above embodiment, the rear side member 16 is illustratively the sheet-like member that can be rolled up by the roll-up unit 28. However, the present invention is not limited to this arrangement. The rear side member 16 may be, for example, a board-like member that is movable in the front-and-rear direction along the two guide rails 20a, 20b.

(2) In the above embodiment, the sunshade device of the present invention is illustratively used with the vehicle that is not provided with a sunroof in an area above a rear seat. However, the sunshade device may be used also with a vehicle that is provided with the sunroof in the area above the rear seat.

(3) The present invention may be used also with a vehicle having a roof most of which is a sunroof (that is referred to as a panorama roof).

(4) In the above embodiment, the front side member 14 is illustratively provided with the two hooks 38. However, the front side member 14 may be provided with a single hook 38, three hooks 38, or more than three hooks 38. In this case, the rear side member 16 may be provided with hook holes 36 corresponding to the number of the hooks 38.

(5) In the above embodiment, the front side member 14 is illustratively provided with the hooks 38, while the rear side member 16 is illustratively provided with the hook holes 36. However, the front side member 14 may be provided with the hook holes 36 and the rear side member 16 may be provided with the hooks 38.

(6) In the above embodiment, the hooks 38 are illustratively used as a means for connecting the front side member 14 with the rear side member 16. However, hook-and-loop fasteners, magnets, or the like may be used as the means.

## Claims

1. A sunshade device for blocking light coming through a window of a vehicle, comprising:
a front window extending to an area above at least one of a driver seat and a front passenger seat, the front window including a portion of a front side of a ceiling;
a light-blocking member disposed below the front window, the light-blocking member including a front side member and a rear side member, wherein the front side member is capable of moving in a front-and-rear direction separately from the rear side member.

2. The sunshade device according to claim 1, further comprising a sun visor disposed in a lower surface side of the front side member, wherein the sun visor is capable of pivoting to a light-blocking position and to a stored position.

3. The sunshade device according to claim 1 or 2, wherein the rear side member includes a sheet-like member, the sunshade device further comprising a roll-up unit, wherein the roll-up unit is capable of rolling up the sheet-like member.

4. The sunshade device according to any one of claims 1 to 3, further comprising a hook, wherein the hook is capable of connecting the front side member with the rear side member in the front-and-rear direction.
